# EUROPÄISCHE PATENTSCHRIFT

(11) **EP 0 709 946 B1**
(45) Veröffentlichungstag und Bekanntmachung des Hinweises auf die Patenterteilung: **09.06.1999**
(21) Anmeldenummer: 95202814.0
(22) Anmeldetag: 18.10.1995
(51) Int. Cl.: H02K 17/14, H02K 3/28, H01J 35/10, H05G 1/66

(54) **Antriebsvorrichtung für eine Drehanode**
Drive for a rotary anode
Entraînement pour anode tournante

(30) Priorität: 25.10.1994 DE 4438037
(43) Veröffentlichungstag der Anmeldung: 01.05.1996
(73) Patentinhaber: Philips Patentverwaltung GmbH, 22335 Hamburg (DE); Koninklijke Philips Electronics N.V., 5621 BA Eindhoven (NL)
(72) Erfinder: Gerling, Dieter, Dr. Ing., c/o Philips, D-22335 Hamburg (DE)
(74) Vertreter: Hartmann, Heinrich, Dipl.-Ing.

(56) Entgegenhaltungen:
- EP-A- 0 603 478
- DE-U- 8 327 682
- US-A- 1 502 909
- US-A- 4 829 551
- US-A- 5 105 141
- US-A- 5 339 348
- PATENT ABSTRACTS OF JAPAN, unexamined applications, E Field, Band 11, Nr. 245, 11. August, 1987 THE PATENT OFFICE JAPANESE GOVERNMENT Seite 46 E 531; & JP-A-62 058 600 (HITACHI)

## Beschreibung

Die Erfindung bezieht sich auf eine Antriebsvorrichtung für eine Drehanode einer Röntgenröhre mit einem Antriebsmotor mit außenliegendem Stator, der mindestens drei symmetrisch am Umfang verteilte Spulengruppen aufweist, und mit innenliegendem Rotor, der die Drehanode antreibt und mit dieser in einem Vakuum liegt.

Eine derartige Antriebsvorrichtung ist z.B. durch die ältere, am 10. 11. 1994 veröffentlichte Gebrauchsmusteranmeldung 94 15 240.3 bekannt geworden. Bei derartigen Anordnungen liegt der Rotor zusammen mit der vom Rotor angetriebenen Drehanode in einem Vakuum. Es ist bekannt, derartige Antriebsmotoren zwei-strängig mit vier Nuten oder drei-strängig mit sechs Nuten auszuführen. Bei den bekannten Bauarten ist der Rotor bisher auf Kugellagern gelagert. Bei dieser Art von Lagerung gibt es Probleme beim Betrieb im Vakuum, so daß der Motor nicht im Dauerbetrieb gefahren werden kann. Die bisher bekannten Antriebsvorrichtungen für derartige Drehanoden arbeiten daher nicht im Dauerbetrieb, sondern in einem Start/Stopp-Betrieb. Dies bedeutet, daß die Antriebsvorrichtungen so ausgelegt sein müssen, daß sie schnell hochgefahren und schnell wieder abgebremst werden können.

Neuerdings geht man dazu über, die bisher verwendeten Kugellager durch sogenannte Spiralrillenlager zu ersetzen, bei denen zwischen den sich drehenden Teilen ein flüssiger Metallfilm vorgesehen ist. Eine derart gelagerte Drehanode könnte somit auch in einem Dauerbetrieb betrieben werden. Die bisher verwendeten zwei-strängigen oder drei-strängigen Antriebsmotoren sind jedoch für einen Start/Stopp-Betrieb ausgebildet, d.h. sie sind ausgelegt auf ein schnelles Anfahren und ein schnelles Abbremsen, wobei hohe Ströme und ein großes Drehmoment erreicht werden. Würde man daher eine Drehanode, die über ein Spiralrillenlager mit einem flüssigen Metallfilm gelagert ist, mit einem bisher üblichen Antriebsmotor antreiben, so würde eine zu große Hitze entstehen, so daß kein Dauerbetrieb ermöglicht werden könnte. Es ist daher ein Antriebsmotor für Dauerbetrieb mit kleineren Strömen gefordert.

Röntgengeräte mit derartigen Drehanoden haben erfahrungsgemäß eine recht lange Lebensdauer. Dabei kann es vorkommen, daß nur der feststehende Stator defekt ist und ausgewechselt werden muß. Wenn es sich dabei um ein Gerät mit Kugellagerung handelt, so dient als Antriebsvorrichtung ein Motor mit einer zwei- oder drei-strängigen Ständerwicklung, die im Start/Stopp-Betrieb für hohe Ströme betrieben wird und somit für großes Drehmoment und schnellen Hochlauf ausgelegt ist. In einem solchen Fall müßte ein auf Start/Stopp-Betrieb ausgelegter Stator verwendet werden. Ein Stator, der für Dauerbetrieb ausgelegt ist, könnte dagegen nicht verwendet werden. Dies erfordert somit eine Bereitstellung von elektrischen Maschinen unterschiedlicher Strangzahl und unterschiedlicher Auslegung (entweder für Dauerbetrieb oder für Start/Stopp-Betrieb) für ein und dieselbe Antriebsaufgabe. Eine derartige Bereitstellung bedeutet sowohl für die Entwicklung als auch für die Produktion und Lagerhaltung erhöhte Kosten.

Durch das DE-GM 83 27 682 ist ein Steckerteil für einen Stator mit fest angeordneten Wicklungskontakten bekannt geworden. Hierbei geht es darum, die Möglichkeit einer Umschaltung zwischen Stern- und Dreieckschaltung oder ihrer Kombination zu gewährleisten. Dies wird bei der bekannten Bauart dadurch erreicht, daß die Klemmen des Steckerteils aus einer Kreislaufkarte bestehen, die mittels herausragender Zungen und vorabgedrückter Leiterwege auf der Kreislaufkarte die Wicklungen in erwünschter Weise schalten kann. Danach ist es möglich, für jede Schaltung eine Kreislaufkarte zu haben.

Aus der US-A-5 105 141 ist eine Antriebsvorrichtung für eine Drehanode einer Röntgenröhre bekannt, welche einen Wechselrichter aufweist, mit dem zwei- oder dreisträngige Motoren angetrieben werden können.

Aus der US-A-1 502 909 ist ein Käfigläufermotor bekannt, bei dem der Startvorgang beeinflußt wird, indem die Verschaltung der Spulen während des Betriebes des Motors geändert wird.

Der Erfindung liegt die Aufgabe zugrunde, eine Antriebsvorrichtung der eingangs genannten Art derart zu gestalten, daß sowohl zwei-strängiger als auch drei-strängiger Betrieb mit möglichst wenig Aufwand ermöglicht wird.

Diese Aufgabe wird gemäß einer ersten Ausführungsform der Erfindung dadurch gelöst, daß jede Spulengruppe mindestens zwei voneinander getrennte Spulen aufweist, deren Enden jeweils auf eine Klemme eines Klemmenkastens geführt sind, daß die Klemmen, je nach der gewünschten Verschaltung, durch eine Festverdrahtung verbindbar sind, und daß diese Festverdrahtung so gestaltet ist, daß entweder die Spulen jeder Spulengruppe in Reihe geschaltet sind, oder die Spulen jeder Spulengruppe parallel geschaltet sind, wobei der Anfang der drei Spulengruppen jeweils gesondert an die Phasen und das Ende jeweils gemeinsam zu dem Mittelpunkt (MP)-Anschluß geführt ist. Damit bietet sich die Möglichkeit, mit ein und demselben Stator sowohl eine zwei-strängige als auch eine drei-strängige Verschaltung herzustellen, indem jeweils eine andere Festverdrahtung gewählt wird, die die entsprechenden Klemmen in der gewünschten Weise miteinander verschaltet. Die Lagerhaltung von mehreren Statoren für die verschiedenen Antriebe kann somit entfallen.

Die Reihenschaltung der Spulen jeder Spulengruppe ist für einen Dauerbetrieb des Antriebsmotors geeignet. Aufgrund der hohen Impedanz jeder Spulengruppe ergeben sich kleine Ströme. Eine derartige Bauweise ermöglicht einen besseren Wirkungsgrad im Dauerlauf. Ein solcher Antriebsmotor kann somit für solche Drehanoden verwendet werden, die über ein neuartiges Spiralrillenlager gelagert sind und somit einen Dauerbetrieb zulassen.

Die Parallelschaltung der Spulen jeder Spulengruppe ist für einen Start/Stopp-Betrieb geeignet. Aufgrund der kleinen Impedanz jeder Spulengruppe ergeben sich hohe Ströme im Vergleich zu einer Bauweise mit Dauerbetrieb. Diese hohen Ströme rufen ein großes Drehmoment hervor, so daß ein schneller Hochlauf gewährleistet ist. Eine derartige Bauart eignet sich somit für einen Drehanodenantrieb, bei dem die Lagerung der Drehanode über eine Kugellagerung erfolgt und somit keinen Dauerbetrieb zuläßt.

Die erfindungsgemäße Aufgabe wird gemäß einer zweiten Ausführungsform der Erfindung dadurch gelöst, daß jede Spulengruppe mindestens zwei voneinander getrennte Spulen aufweist, deren Enden jeweils auf eine Klemme eines Klemmenkastens geführt sind, daß die Klemmen, je nach der gewünschten Verschaltung, durch eine Festverdrahtung verbindbar sind, daß die Spulen von zwei räumlich um 120° gegeneinander versetzten Spulengruppen jeweils parallel zueinander geschaltet sind, daß die Spulen der dritten Spulengruppe in Reihe und antiparallel zu einer der beiden anderen Spulengruppen geschaltet sind und daß der Anfang der beiden um 120° räumlich versetzten Spulengruppen jeweils gesondert an die Phasenanschlußklemmen A, B und das Ende der beiden Spulengruppen gemeinsam an die Phasenanschlußklemme C geführt ist. Diese Anordnung ist für einen Start/Stopp-Betrieb geeignet. Damit ist eine zweisträngige Ansteuerung möglich. Auch dabei kann die Wicklung durch einfache Schaltung aus den drei symmetrisch am Umfang verteilten Spulengruppen hergestellt werden.

Mit einer derartigen Bauweise ist somit ein Betrieb mittels einer zwei-strängigen Wicklung ermöglicht, ohne daß dazu ein neuer Stator mit einer anderen Wicklung zur Verfügung gestellt werden müßte. Eine solche Bauweise eignet sich somit insbesondere zum Ersatz von älteren Statorwicklungen, die mit einer zwei-strängigen Antriebsvorrichtung arbeiten.

In Ausgestaltung der Erfindung ist die Festverdrahtung auf einem Stecker realisiert, der vorzugsweise verpolungssicher gestaltet ist. Die entsprechende Verschaltung für zwei- oder drei-strängigen Betrieb erfolgt dann einfach dadurch, daß jeweils lediglich ein anderer Stecker auf den Schaltkasten aufgesteckt wird.

In Ausgestaltung der Erfindung ist vorgesehen, daß die Phasenanschlußklemmen R, S, T bzw. A, B, C bei allen Bauarten immer mit den gleichen Klemmen des Anschlußkastens verbunden sind. Dadurch ergibt sich eine übersichtliche Verschaltung und eine einfache Ausführung der Verdrahtung der jeweiligen Stecker.

Vorzugsweise werden pro Spulengruppe jeweils zwei Spulen vorgesehen, die, je nach den gewünschten Anforderungen, entsprechend einfach geschaltet werden können.

In der Zeichnung sind in den Fig. 1 und 2 zwei Ausführungsbeispiele des Standes der Technik und in den Fig. 3 bis 9 Ausführungsbeispiele des Gegenstandes gemäß der Erfindung schematisch dargestellt.

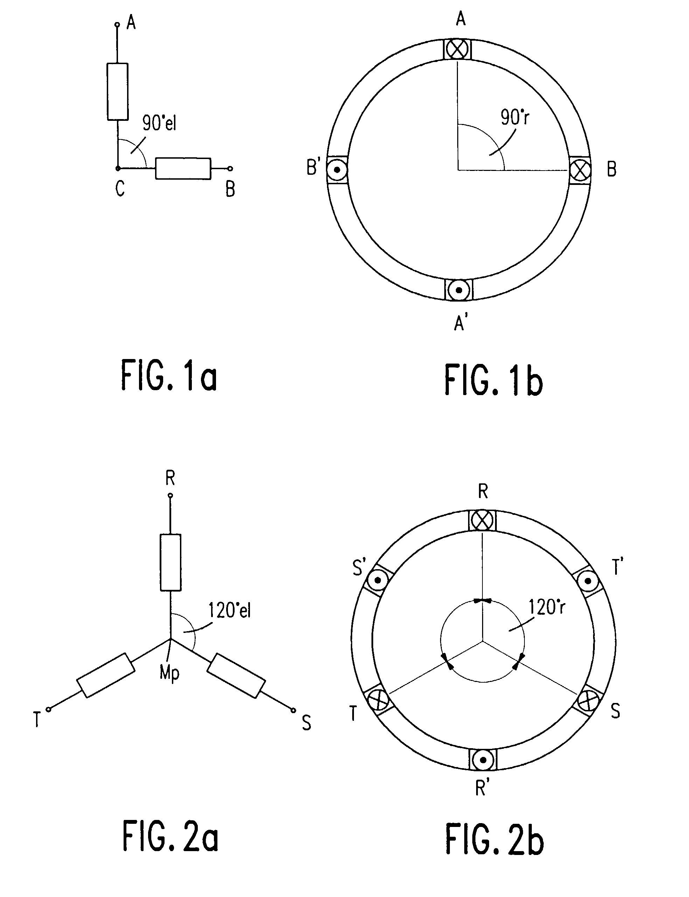

Fig. 1a zeigt das elektrische und
Fig. 1b des räumliche Schaltbild einer zwei-strängigen Statorwicklung,

Fig. 2a zeigt das elektrische und
Fig. 2b des räumliche Schaltbild einer drei-strängigen symmetrischen Wicklung,

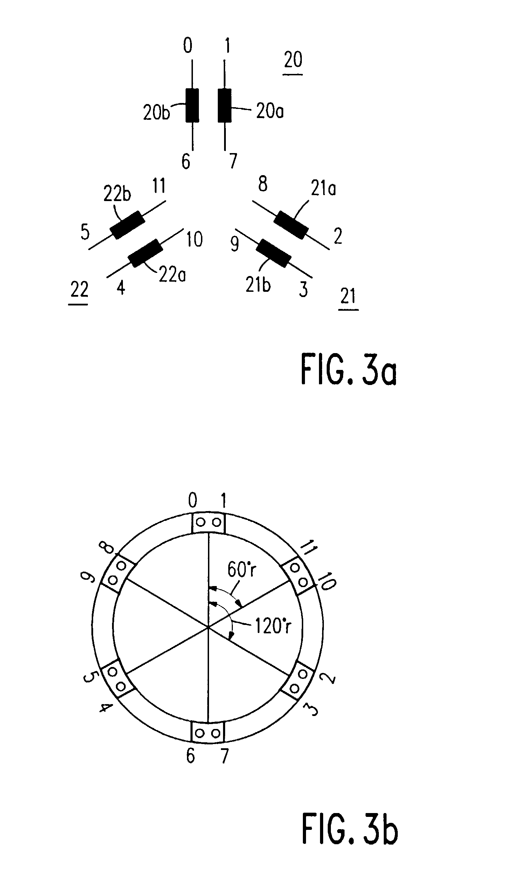

Fig. 3a zeigt das elektrische und
Fig. 3b das räumliche Schaltbild einer Statorwicklung gemäß der Erfindung,

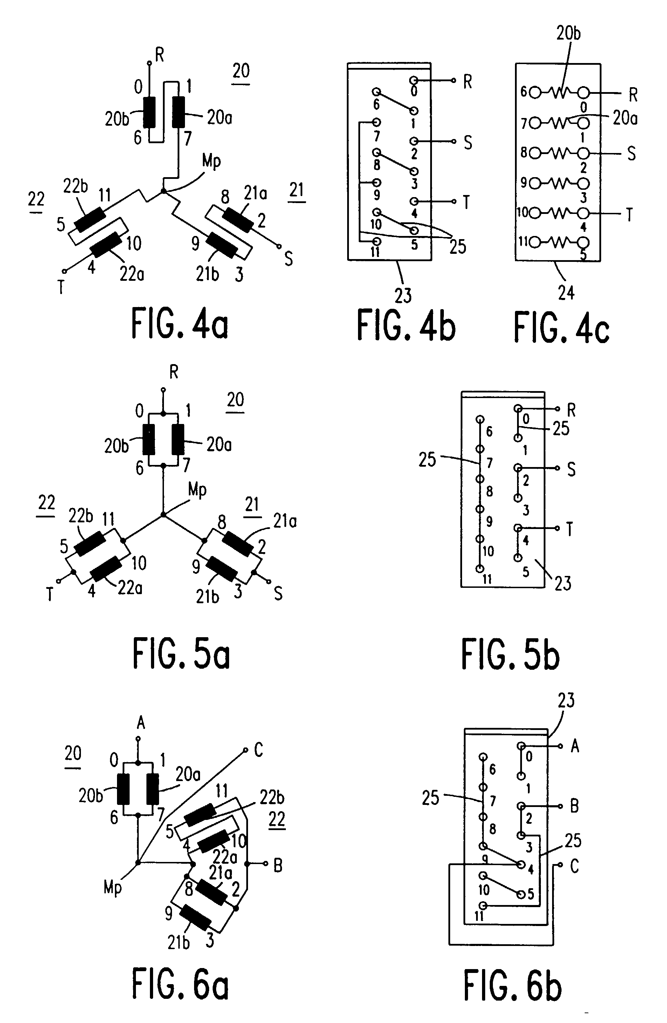

Fig. 4a zeigt eine Ständerschaltung mit drei Spulengruppen für einen Dauerlauf eines Antriebsmotors,
Fig. 5a zeigt eine Ständerschaltung mit drei Spulengruppen für einen Start/Stopp-Betrieb,
Fig. 6a zeigt eine Ständerwicklung mit drei Spulengruppen für einen Start/Stopp-Betrieb,
Fig. 4b bis 6b zeigen jeweils die zugehörigen Verschaltungen an einem Stecker für einen Klemmenkasten, und

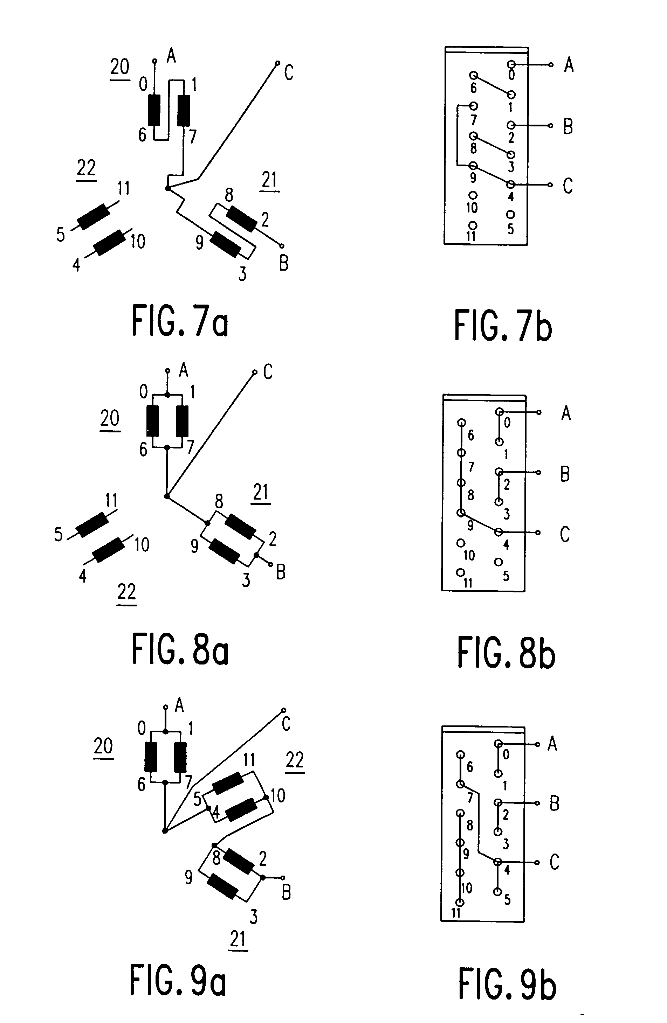

Fig. 4c zeigt den Klemmenkasten ohne aufgesetzten Stecker, Fig. 7 bis 9 zeigen drei weitere Möglichkeiten für eine Ständerwicklung mit drei Spulengruppen mit zwei-strängiger Ansteuerung.

Fig. 1a, b zeigen eine symmetrische zwei-strängige Ständerwicklung mit zwei Strängen, die jeweils um 90° räumlich zueinander versetzt sind und deren Anschlüsse mit A-A', B-B', C bezeichnet sind. Diese Wicklung wird von um 90° phasenverschobenen Spannungen angesteuert.

Fig. 2a, b zeigen eine symmetrische drei-strängige Ständerwicklung, deren Anschlüsse mit R-R', S-S', T-T', MP bezeichnet sind, wobei die drei Stränge um 120° räumlich gegeneinander versetzt angeordnet sind. Die Ansteuerung erfolgt mit Dreiphasen-Drehstrom.

Fig. 3a zeigt das elektrische Schaltbild einer symmtrischen Ständerwicklung gemäß der Erfindung mit drei Spulengruppen 20, 21, 22, wobei jede Spulengruppe zwei voneinander getrennte Spulen 20a, b, 21a, b und 22a, b aufweist. Fig. 3b zeigt schematisch die räumliche Anordnung der Wicklung gemäß Fig. 3a. Die Anfänge der Spulen 20a, b, 21a, b und 22a, b sind jeweils mit den Bezugsziffern 0 bis 5 und die Enden der Spulen jeweils mit den Bezugsziffern 6 bis 11 bezeichnet.

Die Fig. 4a bis 6a zeigen die verschiedenen Verdrahtungen der Spulengruppen 20, 21 und 22, je nachdem, welche Verschaltung gewünscht wird. Dabei sind in den Fig. 4b bis 6b die zugehörigen Verdrahtungen auf einem Stecker 23 zu erkennen, der auf einen Schaltkasten 24 (Fig. 4c) aufsteckbar ist.

Fig. 4a zeigt eine Wicklung 20 bis 22, bei der die beiden Spulen 20a, b, bis 22a, b jeder Spulengruppe jeweils in Reihe geschaltet sind. Damit ist ein Dauerbetrieb mit relativ niedrigem Strom möglich.

Fig. 5a zeigt eine Wicklung, bei der die einzelnen Spulen 20a, b bis 22a, b jeder Spulengruppe 20, 21, 22 parallelgeschaltet sind. Damit ist ein Start/Stopp-Betrieb mit hohen Strömen und schnellem Anlauf möglich.

Fig. 6a zeigt eine Bauweise, bei der die Spulen 20a, b und 21a, b der beiden Spulengruppen 20 und 21 jeweils parallelgeschaltet sind und wobei die Spulen 22a, b der Spulengruppe 22 in Reihe und antiparallel zur Spulengruppe 21 geschaltet sind. Diese Bauweise ermöglicht einen zwei-strängigen Start/Stopp-Betrieb, wobei die Spulengruppen 20 und 21 durch die spezielle Verschaltung im wesentlichen um 90° räumlich zueinander versetzt wirksam sind.

Fig. 4b bis 6b zeigen die jeweils zugehörigen Verschaltungen auf dem jeweiligen entsprechend fest verdrahteten Stecker 23. Die Festverdrahtung ist mit 25 bezeichnet. Sowohl auf dem Stecker 23 als auch auf dem Klemmenblock sind die Anschlußkontakte mit 0 bis 11 bezeichnet, entsprechend auch an den Spulen der Spulengruppen.

Die in Fig. 7a bis 9a dargestellten Schaltbilder zeigen weitere Schaltbeispiele mit drei Spulengruppen, wobei, wie in Fig. 6, eine zwei-strängige Ansteuerung vorgesehen ist.

Fig. 7b bis 9b zeigen die zugehörigen Anschlüsse auf dem Klemmenkasten.

## Patentansprüche

1. Antriebsvorrichtung für eine Drehanode einer Röntgenröhre mit einem Antriebsmotor mit außenliegendem Stator, der mindestens drei symmetrisch am Umfang verteilte Spulengruppen (20, 21, 22) aufweist, und mit innenliegendem Rotor, der die Drehanode antreibt und mit dieser in einem Vakuum liegt, dadurch gekennzeichnet,
- daß jede Spulengruppe (20, 21, 22) mindestens zwei voneinander getrennte Spulen (20a, b, 21a, b, 22a, b) aufweist, deren Enden (0 bis 11) jeweils auf eine Klemme (0 bis 11) eines Klemmenkastens (24) geführt sind,
- daß die Klemmen (0 bis 11), je nach der gewünschten Verschaltung, durch eine Festverdrahtung (25) verbindbar sind, und
- daß diese Festverdrahtung so gestaltet ist, daß entweder die Spulen (20a, b, 21a, b, 22a, b) jeder Spulengruppe (20, 21, 22) in Reihe geschaltet sind, oder die Spulen (20a, b, 21a, b, 22a, b) jeder Spulengruppe (20, 21, 22) parallel geschaltet sind, wobei der Anfang der drei Spulengruppen (20 bis 22) jeweils gesondert an die Phasen (R, S, T) und das Ende jeweils gemeinsam zu dem Mittelpunkt (MP)-Anschluß geführt ist.

2. Antriebsvorrichtung für eine Drehanode einer Röntgenröhre mit einem Antriebsmotor mit außenliegendem Stator, der mindestens drei symmetrisch am Umfang verteilte Spulengruppen (20, 21, 22) aufweist, und mit innenliegendem Rotor, der die Drehanode antreibt und mit dieser in einem Vakuum liegt, dadurch gekennzeichnet,
- daß jede Spulengruppe (20, 21, 22) mindestens zwei voneinander getrennte Spulen (20a, b, 21a, b, 22a, b) aufweist, deren Enden (0 bis 11) jeweils auf eine Klemme (0 bis 11) eines Klemmenkastens (24) geführt sind,
- daß die Klemmen (0 bis 11), je nach der gewünschten Verschaltung, durch eine Festverdrahtung (25) verbindbar sind,
- daß die Spulen (20a, b, 21a, b) von zwei räumlich um 120° gegeneinander versetzten Spulengruppen (20, 21) jeweils parallel zueinander geschaltet sind,
- daß die Spulen (22a, b) der dritten Spulengruppe (22) in Reihe und antiparallel zu einer (21) der beiden anderen Spulengruppen (20, 21) geschaltet sind und
- daß der Anfang der beiden um 120° räumlich versetzten Spulengruppen (20, 21) jeweils gesondert an die Phasenanschlußklemmen (A, B) und das Ende der beiden Spulengruppen (20, 21) gemeinsam an die Phasenanschlußklemme (C) geführt ist.

3. Antriebsvorrichtung nach Anspruch 1 oder 2, dadurch gekennzeichnet, daß die Festverdrahtung (25) auf einem Stecker (23) entweder durch Lötbrücken oder durch Haltleiterschaltelemente realisiert ist.

4. Antriebsvorrichtung nach Anspruch 1 oder 2, dadurch gekennzeichnet, daß die Phasenanschlußklemmen (R, S, T bzw. A, B, C) immer mit den gleichen Klemmen (0, 2, 4) des Klemmenkastens (24) verbunden sind.

## Claims

1. A drive arrangement for a rotary anode of an X-ray tube, comprising a drive motor with an external stator comprising at least three coil groups (20, 21, 22) which are spaced-apart symmetrically along the circumference, and with an internal rotor, which drives the rotary anode together with which it is situated in a vacuum, characterized in that
- each coil group (20, 21, 22) comprises at least two separate coils (20a, 20b, 21a, 21b, 22a, 22b), whose ends (0 to 11) are each connected to a terminal (0 to 11) of a terminal box (24),
- the terminals (0 to 11) are connectible to one another by means of a hard wiring (25) in accordance with the desired configuration, and
- the hard wiring (25) is such that the coils (20a, 20b, 21a, 21b, 22a, 22b) of each coil group (20, 21, 22) are connected in series, or the coils (20a, 20b, 21a, 21b, 22a, 22b) of each coil group (20, 21, 22) are connected in parallel, the beginnings of the three coil groups (20 to 22) each being separately led to the phases (R, S, T) and the ends of the three coil groups being commoned at the central terminal (MP).

2. A drive arrangement for a rotary anode of an X-ray tube, comprising a drive motor with an external stator comprising at least three coil groups (20, 21, 22) which are spaced-apart symmetncally along the circumference, and with an internal rotor, which drives the rotary anode together with which it is situated in a vacuum, characterized in that
- each coil group (20, 21, 22) comprises at least two separate coils (20a, 20b, 21a, 21b, 22a, 22b), whose ends (0 to 11) are each connected to a terminal (0 to 11) of a terminal box (24),
- the terminals (0 to 11) are connectible to one another by means of a hard winng (25) in accordance with the desired configuration,
- the coils (20a, 20b, 21a, 21b) of each of two coil groups (20, 21) which are geometrically spaced apart by 120° are connected in parallel with one another,
- the coils (22a, 22b) of the third coil group (22) are connected in senes and in anti-parallel with one (21) of the two other coil groups (20, 21), and
- the beginnings of the each of the two coil groups (20, 21) which are geometrically spaced apart by 120° are separately led to the phase terminals (A, B) and the ends of the two coil groups (20, 21) are commoned at the phase terminal (C).

3. A drive arrangement as claimed in Claim 1 or 2, characterized in that the hard wiring (25) is formed on a connector (23) either by means of solder straps or by means of semiconductor switches.

4. A drive arrangement as claimed in Claim 1 or 2, characterized in that the phase terminals (R, S, T and A, B, C, respectively) are always connected to the same terminals (0, 2, 4) of the terminal box (24).

## Revendications

1. Dispositif d'entraînement pour une anode tournante d'un tube à rayons X avec un moteur d'entraînement doté d'un stator externe qui présente au moins trois groupes de bobines (20, 21, 22) répartis symétriquement sur sa périphérie et d'un rotor interne qui entraîne l'anode tournante et se trouve avec celle-ci sous vide, caractérisé en ce que:
- chaque groupe de bobines (20, 21, 22) présente au moins deux bobines (20a, b, 21a, b, 22a, b) séparées l'une de l'autre dont les extrémités (0 à 11) sont respectivement dirigées sur une borne (0 à 11) d'une boîte de connexions (24),
- que les bornes (0 à 11) peuvent être reliées par un câblage fixe (25) en fonction du montage souhaité et
- que ce câblage fixe est conçu de telle sorte que soit les bobines (20a, b, 21a, b, 22a, b) de chaque groupe de bobines (20, 21, 22) sont montées en séne, soit les bobines (20a, b, 21a, b, 22a, b) de chaque groupe de bobines (20, 21, 22) sont montées en parallèle, le début des trois groupes de bobines (20 à 22) étant respectivement dirigé séparément sur les phases (R, S, T) et la fin étant respectivement dirigée ensemble vers la borne du point central (PC).

2. Dispositif d'entraînement pour une anode tournante d'un tube à rayons X avec un moteur d'entraînement doté d'un stator externe qui présente au moins trois groupes de bobines (20, 21, 22) répartis symétriquement sur sa périphérie et dotés d'un rotor interne qui entraîne l'anode tournante et se trouve avec celle-ci sous vide, caractérisé en ce
- que chaque groupe de bobines (20, 21, 22) présente au moins deux bobines (20a, b, 21a, b, 22a, b) séparées l'une de l'autre dont les extrémités (0 à 11) sont respectivement dirigées sur une borne (0 à 11) d'une boîte de connexions (24),
- que les bornes (0 à 11) peuvent être reliées par un câblage fixe (25) en fonction du montage souhaité;
- que les bobines (20a, b, 21a, b) de deux groupes de bobines (20, 21) décalées réciproquement de 120° dans l'espace sont respectivement montées en parallèle,
- que les bobines (22a, b) du troisième groupe de bobines (22) sont montées en série et antiparallèlement à l'un des deux autres groupes de bobines (20, 21) et
- que le début des deux groupes de bobines (20, 21) décalés dans l'espace de 120° est dirigé séparément vers les bornes de connexion de phase (A, B) et l'extrémité des deux groupes de bobines (20, 21) est dirigée ensemble sur la borne de connexion de phase (C).

3. Dispositif d'entraînement selon l'une des revendications 1 ou 2, caractérisé en ce que le câblage fixe (25) est réalisé sur une prise (23), soit par pontage, soit par des éléments de commutation à semi-conducteurs.

4. Dispositif d'entraînement selon l'une des revendications 1 ou 2, caractérisé en ce que les bornes de connexion de phase (R, S, T ou A, B, C) sont toujours reliées aux mêmes bornes (0, 2, 4) de la boîte de connexions (24).
